**Europäisches Patentamt**

**European Patent Office**

**Office européen des brevets**

(19)

(11) Veröffentlichungsnummer: **0 157 925**
**B1**

(12)   **EUROPÄISCHE PATENTSCHRIFT**

(45) Veröffentlichungstag der Patentschrift:
20.04.88

(51) Int. Cl.⁴: **B 23 D 36/00,** B 21 B 39/00

(21) Anmeldenummer: **84115081.6**

(22) Anmeldetag: **10.12.84**

(54) **Transport- und Positioniereinrichtung zum Abrichten von Walzgut.**

(30) Priorität: **19.03.84 DE 3410066**

(43) Veröffentlichungstag der Anmeldung:
**16.10.85 Patentblatt 85/42**

(45) Bekanntmachung des Hinweises auf die Patenterteilung:
**20.04.88 Patentblatt 88/16**

(84) Benannte Vertragsstaaten:
**AT BE CH DE FR GB LI LU NL SE**

(56) Entgegenhaltungen:
**DE - A - 1 928 019**
**DE - A - 2 458 763**
**US - A - 3 013 459**

**RUSSIAN ENGINEERING JOURNAL, Band 46, Nr. 4,
1966, Seiten 46-48; YU. YA. ESTERZON et al.: "Accurate
cutting of sheet material from a roller conveyor"
PATENTS ABSTRACTS OF JAPAN, Band 7, Nr. 74
(M-203)(1219), 26. März 1983; & JP - A - 58 2149
(KAWASAKI SEITETSU) 01.07.1983**

(73) Patentinhaber: **Siemens Aktiengesellschaft Berlin und
München, Wittelsbacherplatz 2, D-8000 München 2 (DE)**

(72) Erfinder: **Weber, Roland, Dipl.-Ing.,
Andreas-Paulus-Strasse 47, D-8520 Erlangen (DE)**

## Beschreibung

Die Erfindung betrifft eine Walzguttransport- und Positioniereinrichtung zum Behandeln von Walzgut mit einem Rollengang, bestehend aus einer Anzahl in Transportrichtung hintereinander angeordneter Rollen, die einzeln von je einem Elektromotor angetrieben werden, nach dem Oberbegriff des Patentanspruchs 1.

Nach Abschluss des Walzvorganges besteht häufig die Notwendigkeit, das aus dem letzten Walzgerüst austretende Walzgut in bestimmte Längen zu unterteilen. Dazu ist der sich an das letzte Walzgerüst anschliessende Rollengang mit einem Werkzeug und einer Längenmessvorrichtung ausgerüstet. Es ist nun zum Unterteilen von Blechen aus der DE-A-1 928 019 bekannt, mit Hilfe mechanisch verstellbarer Anschläge das Blech mit seiner Vorderkante um einen solchen Betrag von der Schneidkante einer Schere entfernt anzuhalten, dass die gewünschte Länge abgetrennt werden kann. Diese Methode ist vor allem dann nicht mehr rationell, wenn flexibel gearbeitet werden muss, d. h. wenn nicht eine grössere Anzahl gleich langer Stücke, sondern häufig wechselnde Längen gefertigt werden müssen. In einem solchen Fall ist es wirtschaftlicher, die Positionierung mit Hilfe der Rollenantriebe und entsprechender elektrischer Steuerung der Rollenantriebsmotoren vorzunehmen.

Dieses bekannte Verfahren hat jedoch einige Nachteile, die insbesondere damit zusammenhängen, dass die üblicherweise für Rollenantriebsmotoren von Rollengängen benutzte und aus der «Siemens-Zeitschrift» 47 (1973), Beiheft «Antriebstechnik und Prozessautomatisierung in Hütten- und Walzwerken», Seiten 96 und 97 für einen «Auslaufrollgang einer Warmband-Kontistrasse» an sich bekannte Spannungs- bzw. EMK-Regelung nach dem Übergang von der Transportphase in die Positionierungsphase im Positionierbetrieb nicht exakt die Walzgutgeschwindigkeit erzielt, welche die überlagerte Wegregelung als Sollwert vorgibt. Der vom Wegregler gebildete Spannungs- bzw. EMK-Sollwert ist nämlich vor allem deshalb kein genaues Mass für die tatsächliche Geschwindigkeit, weil nicht alle Rollen gleichzeitig am Walzgut anliegen. Wenn, um diese Nachteile zu beseitigen, der Geschwindigkeits-Istwert durch direkte Geschwindigkeitsmessung am Walzgut ermittelt wird, kann bei der üblichen Zusammenfassung von mehreren Rollen (beispielsweise 5) zu Rollgangsgruppen und deren Zuordnung zu je einem Regelkreis diejenige Gruppe, die noch keinen oder keinen Kontakt mehr zum Walzgut hat, nach der Umschaltung von der Spannungs- bzw. EMK-Regelung auf die Geschwindigkeitsregelung «durchgehen», d. h. mit ihrer Maximaldrehzahl im Leerbetrieb arbeiten. Es könnte sogar der Fall eintreten, dass, falls diese Rollen bzw. Rollgangsgruppen zuletzt im Umkehrbetrieb gearbeitet haben, diese sich in umgekehrter Drehrichtung mit Maximaldrehzahl bewegen, was eine Betriebsstörung zur Folge hätte. Bei der direkten Geschwindigkeitsmessung ergibt sich ein weiterer Nachteil daraus, dass der Geschwindigkeitsmesswert erst dann zur Verfügung steht, wenn das Walzgut vom Transport- in den Positionierungsbereich übertritt. Bei der dabei erfolgenden Umschaltung von der einen auf die andere Betriebsart werden die Antriebsmittel einer Stossbelastung und damit entsprechend hohem Verschleiss ausgesetzt.

Der Erfindung liegt die Aufgabe zugrunde, diese Nachteile zu vermeiden und insbesondere dafür zu sorgen, dass die Umschaltung der Regeleinrichtung vom Transportbetrieb (EMK-Regelung) auf den Positionierbetrieb (Geschwindigkeitsregelung) und das Wiedereinsetzen der EMK-Regelung auch im Positionierbetrieb beim Überschreiten eines einstellbaren EMK-Istwertes für die betreffende Rollgangsgruppe nicht stossweise erfolgt.

Dies wird bei einer Einrichtung der eingangs genannten Art durch die im Patentanspruch 1 angegebene Erfindung gelöst. Dadurch ist erreicht, dass einmal der Übergang von der Transportphase (EMK-Regelung) in die Positionierphase (Geschwindigkeitsregelung) sanft erfolgt und dass darüber hinaus beim Eintritt in den Geschwindigkeits-Messbereich und beim Verlassen dieses Bereiches nicht auf reine Geschwindigkeits- bzw. EMK-Regelung umgeschaltet wird, sondern durch Einbringung von Schwellen in den Istwert-Kanälen in Form übergeordneter Begrenzungsspannungen für allmähliche Übergänge gesorgt ist.

Vorteilhafte Weiterbildungen und Ausgestaltungen der Einrichtung sind in den Unteransprüchen gekennzeichnet.

Einzelheiten der Erfindung werden anhand eines Ausführungsbeispiels im folgenden näher erläutert. Es zeigen:

Fig. 1 eine Prinzipdarstellung des Regelkreises für die Antriebsmotoren einer Rollengruppe, und

Fig. 2 Einzelheiten der Steuerung und Begrenzerspannungsbildung des in Fig. 1 dargestellten Regelkreises.

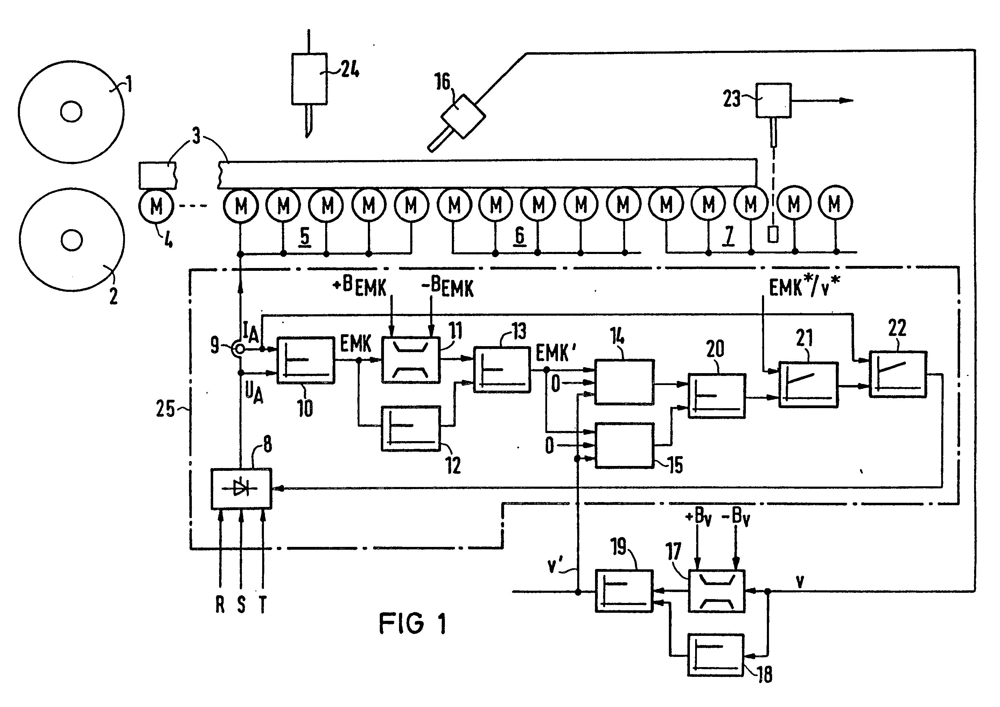

In Fig. 1 sind die Walzen 1, 2 eines nicht näher gezeigten letzten Gerüstes einer Walzstrasse dargestellt, aus denen das Walzgut 3 ausgetreten ist, das sich auf den Rollen eines anschliessenden Rollenganges befindet, welche einzeln von Gleichstrom-Elektromotoren 4 angetrieben sind, die jeweils zu Fünfergruppen 5, 6, 7 zusammengefasst, d. h. elektrisch parallelgeschaltet sind. Jeder dieser Gruppen ist ein Regelkreis zugeordnet, von denen in Fig. 1 lediglich derjenige der Gruppe 5 dargestellt ist. Die Regelkreise der anderen Antriebsgruppen sind identisch aufgebaut und bedürfen daher keiner gesonderten Beschreibung.

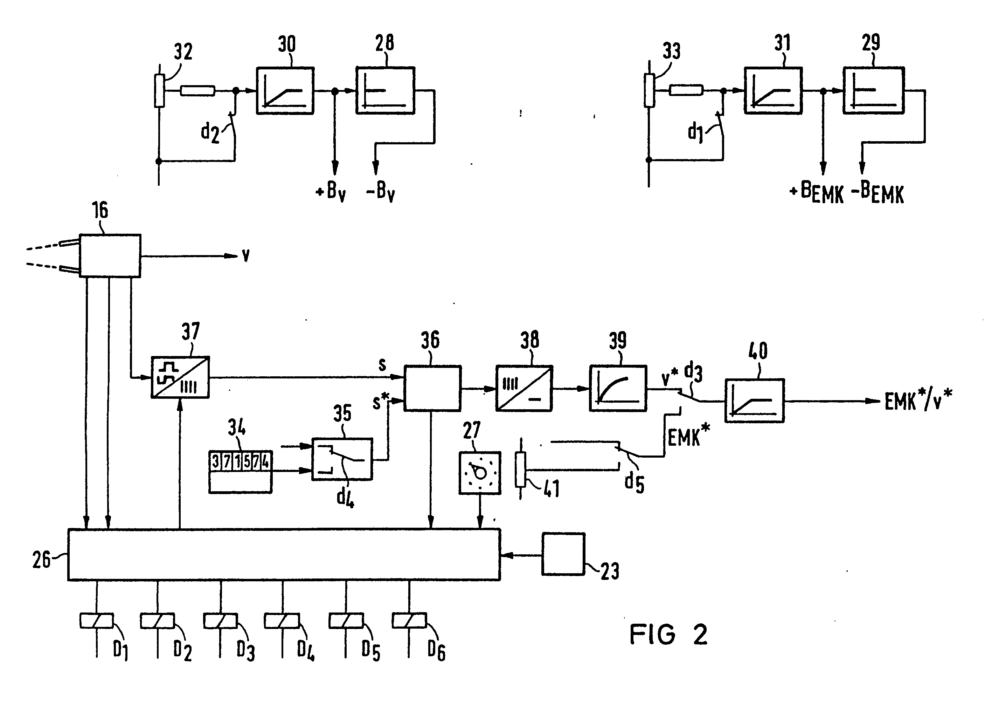

Die fünf parallelgeschalteten Antriebsmotoren der Gruppe 5 werden von einem Stromrichter 8 aus dem Drehstromnetz RST gespeist. Der Wert der vom Stromrichter erzeugten Spannung $U_A$ und der über ein Messwandler 9 gemessene Strom-Istwert $I_A$ werden einer Rechenstufe 10 zugeführt, welche daraus den EMK-Wert nach der Formel $E = U - I_A \times R_A$ bildet, wobei $R_A$ der aus der Parallelschaltung der einzelnen ohmschen Ankerwiderstände, bezogen auf eine mittlere tragende Rollenzahl errechnete Innenwiderstand der Motorgruppe 5 ist. Der so gebildete EMK-Wert wird sowohl einer Begrenzerstufe 11 wie einem Umkehrverstärker 12 zugeleitet. Die Begrenzerstufe erhält ferner einen positiven Grenzwert $+B_{EMK}$ und einen negativen Grenzwert $-B_{EMK}$, die auf noch zu beschreibende Weise gebildet werden. Die Ausgänge beider Stufen sind an einen Addierverstärker 13 angeschlossen, der aus diesen beiden Werten einen resultierenden Wert EMK' bildet. Der von einem Walzgut-Geschwindigkeitsmesser 16 gemessene elektrische Wert v wird, in gleicher Weise wie bereits für die Verarbeitung des EMK-Wertes beschrieben, einer Begrenzerstufe 17 und einem Umkehrverstärker 18 zugeleitet. Die Begrenzerstufe 17 erhält ebenfalls einen positiven Grenzwert $+B_v$ und einen negativen Grenzwert $-B_v$, deren Bildung noch zu beschreiben ist. Die Ausgangswerte beider Stufen sind einem weiteren Addierverstärker 19 zugeführt, an dessen Ausgang der resultierende Wert v' entsteht. Die Werte EMK' und v' sind zusammen mit einem 0-Wert je einer Stufe für die Positivstwertauswahl 14 und die Negativstwertauswahl 15 zugeführt. In beiden Stufen wird nun je nach der absoluten Grösse der zugeführten Werte der jeweils positivste und negativste Wert, der entweder ein EMK- oder ein Geschwindigkeitswert sein kann, mit korrektem Vorzeichen gebildet und über einen weiteren Addierverstärker 20 als resultierender Istwert einer Regelstufe 21 zugeführt. Je nach Position des Walzgutes 3 gelangt an diese Regelstufe darüberhinaus entweder ein EMK- oder ein Geschwindigkeits-Sollwert. Diese bildet aus den genannten Eingangswerten den eigentlichen Stromsollwert für den Stromregler 22, der nun seinerseits aus dem gemessenen Stromistwert $I_A$ und dem in der beschriebenen Weise erzeugten Stromsollwert $I_{A*}$ die Stellgrösse für den Stromrichter 8 erzeugt. Eine Lichtschranke 23 gibt die Wegregelung über ein noch zu beschreibendes Steuerwerk frei, sobald die Frontkante des Walzgutes 3 diese Lichtschranke erreicht. Nach dem Stillstand des Walzgutes tritt ein Trennwerkzeug 24 in Funktion, um das Walzgut in der gewünschten Länge zu durchtrennen. Der in Fig. 1 durch die strichpunktierte Linie 25 umschlossene Regelkreis ist für jede Rollgangsgruppe einmal vorhanden. Die in Fig. 1 ausserhalb der strichpunktierten Linie und in Fig. 2 dargestellten Schaltelemente übernehmen übergeordnete Steuerungsfunktionen und sind für die gesamte Einrichtung nur einmal vorhanden. Einem Steuerwerk 26 sind aufgrund der ihm vom Walzgut-Geschwindigkeitsmesser 16 und von der Lichtschranke 23 zugeführten Daten sowie der von Hand eingegebenen Betriebsart die verschiedenen Steuerfunktionen zugeordnet. Mit Hilfe des Betriebsartenschalters 27 ist es möglich, von Hand vorzuwählen, ob die automatische Regelung in Funktion treten soll oder ob stattdessen der Weg s, d.h. die Länge des abzutrennenden Materials oder auch die Positioniergeschwindigkeit von Hand eingestellt werden sollen. Darüber hinaus enthält die Fig. 2 Baugruppen für die Erzeugung der positiven und negativen Begrenzerspannungen $+B_{EMK}$, $-B_{EMK}$ und $+Bv$, $-Bv$ für die EMK- und Geschwindigkeits-Begrenzerstufen 11, 17.

Beide Baugruppen bestehen aus einem Umkehrverstärker 28 für die Geschwindigkeits-Begrenzerstufe 17 sowie 29 für die EMK-Begrenzungsstufe 11, denen je ein Hochlaufgeber 30, 31 zugeordnet ist. Diese Hochlaufgeber haben die Aufgabe, die an den einstellbaren Widerständen 32, 33 abgegriffenen Begrenzerspannungen nicht sofort in voller Höhe, sondern langsam ansteigend an die Begrenzerstufen gelangen zu lassen. Dadurch werden stossweise Übergänge beim Umschalten von der einen auf die andere Betriebsart vermieden.

Der Walzgut-Geschwindigkeitsmesser 16 liefert in analoger Form für die V-Regelung Geschwindigkeiten und über einen getrennten Kanal, Wegimpulse, aus denen mit Hilfe eines Wegzählers 37 die zurückgelegten Wege für die Wegregelung ermittelt werden. Die Schnittlänge muss entweder von Hand mit Hilfe eines Dekadenschalters 34 oder von einem Rechner vorgegeben werden. Um zwischen beiden Möglichkeiten wählen zu können, ist eine Weiche 35 vorhanden, welche einen Umschaltkontakt $d_4$ enthält, der dem vom Steuerwerk 26 betätigten Relais $D_4$ zugeordnet ist. Dieser Weg-Sollwert wird einer digitalen Differenzbildungsbaugruppe 36 zugeführt, deren Istwert in Form von Wegeinheiten vom Wegzähler 37 aus den vom Walzgut-Geschwindigkeitsmesser 16 erzeugten Wegimpulsen errechnet wird. Die verbleibende Wegdifferenz wird über einen Digital-Analog-Umsetzer 38 einem Wegregler 39 zugeführt, welcher die jeweilige Wegdifferenz mit Hilfe des Geschwindigkeits-Weg-Diagramms in einen Geschwindigkeits-Sollwert umrechnet.

Durch Einstellen des Betriebswahlschalters 27 kann nun die jeweilige Betriebsart der Anlage mit Hilfe der Relais $D_1$ bis $D_6$ gewählt werden. Die Relais $D_1$ bis $D_6$ erfüllen dabei im erregten Zustand folgende Funktionen:

$D_1$ = Vorrang des Geschwindigkeits-Istwertes;
$D_2$ = Vorrang des EMK-Istwertes;
$D_3$ = Umschaltung vom Positionierbetrieb auf Transportbetrieb;
$D_4$ = Wegsollwert von Hand;
$D_5$ = Umschaltung vom Gleichlaufsollwert auf den Geschwindigkeitssollwert von Hand, und
$D_6$ = Festklemmen des Walzgutes.

Für den Betriebsablauf ergeben sich folgende Zustände:

Bei Austritt des Walzgutes aus dem letzten Gerüst mit den Walzen 1, 2 sind die Relais $D_2$ und $D_3$ angezogen. Dies bedeutet, dass wegen des geschlossenen Kontaktes $d_1$ die EMK-Begrenzerstufe 11 noch nicht in Funktion tritt, so dass EMK' = EMK ist. Der Umschaltkontakt $d_3$ ist in seiner unteren Position, so dass der EMK-Sollwert über den Hochlaufgeber 40 an der Regelstufe 21 wirksam ist. Das Relais $D_5$ darf nicht erregt sein solange sich das Walzgut 3 noch im Gerüst befindet. Bei dieser Konstellation arbeitet die Anordnung mit reiner EMK-Regelung im Transportbetrieb (Gleichlauf mit Walzgerüst).

Sobald nun die Vorderkante des Walzgutes den Geschwindigkeitsmesser 16 passiert, tritt ein Geschwindigkeits-Istwert auf. Dabei fällt das Relais $D_2$ ab. Zu diesem Zeitpunkt muss entweder vom Rechner oder von Hand der Wegsollwert s*, d. h. die Strecke zwischen der Vorderkante des Walzgutes und dem Schneidwerkzeug 24 abzüglich der Festlänge, d. h. dem Abstand zwischen Schneidwerkzeug 24 und Lichtschranke 23 vorgegeben sein. Je nach dem gewünschten, am Betriebswahlschalter 27 eingestellten Zustand ist dabei das Relais $D_4$ entweder angezogen oder abgefallen und die Weiche 35 entweder auf Rechner- oder Handbetrieb eingestellt. Durch das Abfallen des Relais $D_2$ schliesst der Kontakt $d_2$ und die bisher am Umkehrverstärker 28 anliegende, von der Einstellung des Potentiometers 32 abhängige, in beiden Vorzeichenrichtungen wirkende Begrenzerspannung geht entsprechend der gewählten Steilheit am Hochlaufgeber 30 langsam auf Null zurück. Dadurch ist erreicht, dass die Geschwindigkeitsregelung nicht sprungartig, sondern allmählich (schleichend) wirksam werden kann. Nachdem beide Relais $D_1$ und $D_2$ abgefallen und demzufolge ihre Kontakte $d_1$ und $d_2$ geschlossen sind, sind beide Regelungen in dieser Phase ohne Begrenzer gleichberechtigt. Dies bedeutet, dass mit Hilfe der Positivstwertauswahlstufe 14 und der Negativstwertauswahlstufe 15 die Verbindung mit dem Addierverstärker 20 aus den jeweils auftretenden Istwerten das Betragsmaximum mit korrektem Vorzeichen ausgewählt wird, das in der Regelstufe 21 mit dem Geschwindigkeits-Sollwert verglichen und daraus der Strom-Sollwert $I_{A*}$ gebildet wird. Dadurch ist erreicht, dass der Übergang vom Transportbetrieb auf den Positionierbetrieb auch bei grossen Unterschieden zwischen dem EMK-Istwert und dem Geschwindigkeits-Istwert stossfrei erfolgen kann, denn es werden beide Istwerte berücksichtigt und verarbeitet, und dass auch bei Ausfall eines der beiden Istwerte, was z. B. beim Wert v' = Null auftritt, wenn das Walzgut den Geschwindigkeits-Messbereich verlässt, der Antrieb nie durchgeht. Wegen der Hinzufügung des Wertes Null sowohl zu der Positivst-Auswahlstufe 14 wie zu der Negativst-Auswahlstufe 15 liefert eine der beiden Stufen immer den Wert 0 und die andere den Extremwert. Dieser erscheint dann als relevanter Istwert hinter dem Addierverstärker. Dabei ist vorausgesetzt, dass beide Istwerte gleiche Vorzeichen haben.

Als negativ wird eine Geschwindigkeit dann definiert, wenn sich das Walzgut von einer Endstellung in Richtung auf das Walzgerüst mit den Walzen 1 und 2 zubewegt, etwa weil das Ziel überfahren worden ist.

Wenn nun die Vorderkante des Walzgutes 3 die Lichtschranke 23 erreicht hat, fällt das Relais $D_3$ ab, so dass vom Transportbetrieb (EMK-Sollwert) nunmehr auf Positionierbetrieb (Geschwindigkeits-Sollwert) umgeschaltet ist. Die Umschaltung auf den Geschwindigkeits-Sollwert wird durch den Hochlaufgeber 40 gedämpft, so dass ein abrupter Übergang wiederum vermieden ist. Gleichzeitig zieht das Relais $D_1$ an und öffnet seinen Kontakt $d_1$, so dass die Begrenzerspannungen $+B_{EMK}$ und $-B_{EMK}$ wirksam werden, was bedeutet, dass der EMK-Istwert entsprechend unterbewertet wird und nur nach Überschreiten des Geschwindigkeits-Istwertes um die Begrenzerspannungen wieder in die Istwert-Bewertung eingeht. Dadurch findet eine schleichende Einbringung der Schwellen $+B_{EMK}$, $-B_{EMK}$ im Istwert-Kanal statt.

Nur wenn die Begrenzerspannungen $+B_{EMK}$, $-B_{EMK}$, $+B_v$ und $-B_v$ gleich Null sind, werden die Istwerte von EMK und Geschwindigkeit unverändert weitergegeben, da in den zugehörigen Addierverstärkern 13 und 19 in diesem Fall der vom Begrenzer stammende Wert Null ist. Bei Anheben der Begrenzerspannungen werden hingegen alle kleineren Istwerte unterdrückt, da diese als gleiche Grössen mit umgekehrten Vorzeichen im Addierverstärker den Wert Null ergeben. Übersteigt der betreffende Istwert hingegen die Begrenzerspannungen, so entsteht am Ausgang des jeweiligen Addierverstärkers ein um den Betrag der Begrenzerspannung verminderter Wert.

Die Wegregelung arbeitet aus Genauigkeitsgründen mit einem digitalen Sollwert-Istwert-Vergleich, wobei der Weg Istwert über den Wegzähler 37 aus den Wegimpulsen des Walzgut-Geschwindigkeitsmessers 16 gebildet wird. Der Wegzähler 37 erhält beim Passieren der Lichtschranke 23 zunächst einen Löschimpuls und wird dann gestartet. Die vorzugebenden Sollwerte s* errechnen sich aus der gewünschten Schnittlänge abzüglich der Festlänge zwischen der Lichtschranke 23 und dem Schneidwerkzeug 24. Bei Erreichen der gewünschten Position zieht das Relais $D_6$ an und bewirkt auf nicht dargestellte Weise, dass das Walzgut 3 festgeklemmt wird. Ausserdem zieht das Relais $D_3$ an und schaltet seinen Kontakt $d_3$ von Positionierbetrieb auf Transportbetrieb um. Weiterhin zieht das Relais $D_5$ an und schaltet seinen Kontakt $d_5$ auf einen am Potentiometer 41 von Hand einstellbaren Sollwert um. Gleichzeitig wird dieser während der Dauer der Erregung des Relais $D_6$ mit nicht dargestellten Mitteln gesperrt. Durch das Festklemmen des Trägers wird ein unkontrolliertes Wegschleichen des Walzgutes 3 aus der Sollposition vermieden.

Nach Beendigung des Schneidvorganges fällt das Relais $D_6$ ab und hebt die Klemmung sowie die vorerwähnte Sperrung des Hand-Sollwertes wieder auf. Dieser Hand-Sollwert wirkt jedoch jetzt nur auf diejenigen Rollgangsgruppen, die nach dem Schneidwerkzeug beginnen, so dass allein das abgeschnittene Teilstück abtransportiert wird. Danach wiederholt sich der Positioniervorgang mit dem beschriebenen Ablauf.

Anstelle der gezeichneten einen Lichtschranke 23 kann zur Erhöhung der Schnittgenauigkeit in grösserer Entfernung vom Schneidwerkzeug 24 eine weitere Lichtschranke angeordnet werden, wenn neben kleineren auch grössere Schnittlängen in Betracht kommen.

## Patentansprüche

1. Transport- und Positioniereinrichtung zum Behandeln von Walzgut (3) mit einem Rollgang, bestehend aus einer Anzahl in Transportrichtung hintereinander angeordneter Rollen, die einzeln von je einem Elektromotor (4) angetrieben werden und einer auf jeden der Motoren oder auf eine elektrisch parallelgeschaltete Gruppe von Motoren (5, 6, 7) hintereinander angeordneter Rollen wirkende Drehzahlregeleinrichtung (25) mit einer von einem EMK-Sollwert und dem gemessenen Istwert des Antriebsmotors oder der Antriebsmotoren einer Gruppe abgeleiteten Stellgrösse für den Motorstrom ($I_A$) sowie mit einem Werkzeug (24) zum Unterteilen des Walzgutes (3) in bestimmte Längen und einer in einem bestimmten Abstand in Bewegungsrichtung hinter dem Werkzeug angeordneten Geschwindigkeitsmesseinrichtung (16) zur Bestimmung des vom Walzgut (3) zurückgelegten Weges, und mit einem Umschalter von einer aus der EMK abgeleiteten Stellgrösse (EMK-Regelung) auf eine aus einem Geschwindigkeits-Sollwert und der genauen Walzgutgeschwindigkeit abgeleiteten Stellgrösse für den Mehrstrom (Geschwindigkeitsregelung), dadurch gekennzeichnet, dass die EMK-Regelung wirksam ist, bevor das Walzgut (3) die Messeinrichtung (16) erreicht (Transportbetrieb) und dass mit Erreichen der Messeinrichtung (16) ein von dieser erzeugter, der Walzgutgeschwindigkeit entsprechender Messwert als Geschwindigkeits-Istwert gebildet wird, und dass ein Wegregler (36–39) vorhanden ist, der aus dem Sollweg, den das Walzgut zur Erreichung der gewünschten Länge zurückzulegen hat, den für diesen Weg nach der Umschaltung von der EMK-Regelung auf die Geschwindigkeitsregelung erforderlichen Verlauf der Walzgutgeschwindigkeit errechnet und einen daraus abgeleiteten Geschwindigkeits-Sollwert bildet, und dass zur stossfreien Umschaltung und zur Vermeidung des «Durchgehens» unbelasteter Rollenantriebe von der EMK-Regelung auf die Geschwindigkeits-Regelung eine Schaltungsanordnung (14, 15, 20) vorhanden ist, die aus den Istwerten von EMK und Geschwindigkeit das betragsmässige Maximum mit korrektem Vorzeichen ermittelt und diesen betragsmässig höheren Wert der Regelstufe (21) als Istwertgrösse zuführt, die daraus und aus den Sollwerten von EMK und Walzgutgeschwindigkeit einen Stromsollwert für die Drehzahlregeleinrichtung (22) bildet.

2. Einrichtung nach Anspruch 1, dadurch gekennzeichnet, dass die Schaltungsanordnung (14, 15, 20) für die Maximalwert-Auswahl der Istwerte von EMK und Walzgutgeschwindigkeit aus einer Stufe für die Positivstwert-Auswahl (14) und einer Stufe für die Negativstwert-Auswahl (15) besteht, denen die Istwerte von EMK und Walzgutgeschwindigkeit sowie je ein Nullwert zugeführt sind, die daraus mit Hilfe eines Addierverstärkers (20) einen resultierenden Istwert bilden, der das betragsmässige Maximum aus EMK- und Geschwindigkeits-Istwert mit korrekten Vorzeichen darstellt.

3. Einrichtung nach Anspruch 1 oder 2, dadurch gekennzeichnet, dass zwischen den Istwerterzeugern von EMK (10) und Walzgutgeschwindigkeit (16) und der Schaltungsanordnung für die Maximalwertbildung (14, 15, 20) von einem Steuerwerk (26) betriebsmässig ein- und ausschaltbare Schwellwertstufen (11, 12, 13 und 17, 18, 19) vorhanden sind, die mit dem Eintritt des Walzgutes (3) in den Geschwindigkeitsmessbereich in der Weise wirksam werden, dass mit dem Einsatz der einen Regelungsart deren Istwert unverändert und der andere Istwert bewertet, d. h. beim Überschreiten wählbarer positiver oder negativer Grenzwerte, an die Schaltungsanordnung für die Maximalwertbildung (14, 15, 20) gelangen und umgekehrt, wobei die Schwellwertstufen aus je einer Begrenzerstufe (11, 17) mit variablen Begrenzerspannungen ($+B_{EMK}$, $-B_{EMK}$ und $+Bv$ und $-Bv$), einem Umkehrverstärker (12, 18) und einem Addierverstärker (13, 19) gebildet sind.

4. Vorrichtung nach einem der vorhergehenden Ansprüche, dadurch gekennzeichnet, dass die Sollwerte von EMK und Walzgutgeschwindigkeit sowie die Begrenzungsspannungen für die Begrenzerstufen von EMK (11) und Walzgutgeschwindigkeit (17) über Hochlaufgeber (30, 31, 40) mit wählbarem Gradienten für den allmählichen Signal- bzw. Spannungsanstieg den zugeordneten Stufen zugeführt sind.

## Claims

1. Transporting and positioning device for the treatment of rolling stock (3) with a roller bed comprising a number of rollers arranged one behind another in the direction of transportation, which are each individually driven by an electromotor (4), and a speed-regulating device (25) affecting each of the motors, or an electrically parallel-connected group of motors (5, 6, 7) of the rollers arranged one behind another, the speed-regulating device having a regulated quantity for the motor current ($I_A$) derived from an e.m.f. reference value and the measured actual value of the driving motor, or the driving motors of a group, as well as with a tool (24) for subdividing the rolling stock (3) in particular lengths, and a speed-measuring device (16) arranged at a particular distance behind the tool in the direction of movement, for the determination of the path covered by the rolling stock (3) and with a selector switch operable from a regulated quantity derived from the e.m.f. setting to a regulated quantity for the multiple current (speed regulation) derived from a speed rereference value and the exact rolling stock speed, characterized in that the e.m.f. setting is effective before the rolling stock (3) reaches the measuring device (16) (transporting operation) and in that on reaching the measuring device (16) a measured value, produced by said measuring device and corresponding to the rolling stock speed, is formed as speed actual value, and in that a path controller (36–39) is provided, which from the reference path which the rolling stock must cover to reach the desired length, calculates the necessary course of the rolling stock speed for this path after switching over from the e.m.f. setting to the speed setting, and forms a speed reference value derived from it, and in that, for a smooth switch-over and for the avoidance of the «passing through» of nonloaded roller drives from the e.m.f. setting, a circuit arrangement (14, 15, 20) is provided, which determines the maximum in terms of magnitude, with the correct sign digit, from the actual values of e.m.f. and speed, and delivers this higher value, in terms of magnitude, of the regulation stage (21) as the actual value amount, which forms from it and from the reference values of e.m.f. and rolling stock speed a current reference value for the speed-regulating device (22).

2. Device according to claim 1, characterized in that the circuit arrangement (14, 15, 20) for the maximum value selection of the actual values of e.m.f. and rolling stock speed comprises one stage for the most positive value selection (14) and one stage for the most negative value selection (15), to which the actual values of e.m.f. and the rolling stock speed, as well as a null value for each, are supplied, which from it, with the aid of an adder-multiplier (20), forms a resulting actual value which represents the maximum in terms of magnitude from e.m.f. and speed actual value with the correct sign digit.

3. Device according to claim 1 or 2, characterized in that between the e.m.f. and rolling stock speed (16) actual value producers, and the circuit arrangement for the maximum value formation (14, 15, 20), threshold value stages (11, 12, 13 and 17, 18, 19) are provided which can be switched on and off by a control unit (26), which on entry of the rolling stock (3) into the speed measuring region, become effective in a way such that with the application of one of the setting types, the actual value of which is unchanged and the other actual value is evaluated, that is, on exceeding selectable positive or negative limits, arrive at the circuit arrangement for the maximum formation (14, 15, 20) and vice versa, wherein the threshold value stages are each formed from a limiter stage (11, 17) with variable limiter voltages ($+B_{e.m.f.}$, $-B_{e.m.f.}$ and $+Bv$ and $-Bv$), a reverse multiplier (12, 18) and an adder-multiplier.

4. Device according to one of the preceding claims, characterized in that the reference values of e.m.f. and rolling stock speed as well as the limiting voltages for the limiter stages of e.m.f. (11) and the rolling speed (17) are supplied to the allotted stages via uptake indicators (30, 31, 40) with selectable gradient for the gradual signal and/or voltage increase.

**Revendications**

1. Dispositif de transport et de positionnement pour le traitement d'un produit laminé (3), comportant une table à rouleaux, constituée par un certain nombre de rouleaux disposés les uns derrière les autres dans la direction de transport et entraînés chacun par un moteur électrique correspondant (4), et un dispositif (25) de réglage de la vitesse de rotation, qui agit sur chacun des moteurs ou sur un groupe de moteurs (5, 6, 7), branchés électriquement en parallèle, de rouleaux disposés les uns derrière les autres, une grandeur de réglage pour le courant ($I_A$) du moteur étant dérivée d'une valeur de consigne de la force électromotrice et de la valeur réelle mesurée du moteur d'entraînement ou des moteurs d'entraînement d'un groupe, et comportant un outil (24) servant à découper le produit laminé (3) selon des longueurs déterminées, et un dispositif (16) de mesure de la vitesse, qui est disposé à une distance déterminée en aval de l'outil dans la direction de déplacement et sert à déterminer le trajet parcouru par le produit laminé (3), et un commutateur servant à réaliser une commutation depuis une grandeur de réglage dérivée de la force électromotrice (réglage de la force électromotrice) sur une grandeur de réglage pour le courant multiple (réglage de la vitesse), dérivée d'une valeur de consigne de la vitesse et de la vitesse précise du produit laminé, caractérisé par le fait que le réglage de la force électromotrice agit avant que le produit laminé (3) atteigne le dispositif de mesure (16) (fonctionnement de transport) et que lorsque le produit atteint le dispositif de mesure (16), une valeur de mesure produite par ce dispositif et correspondant à la vitesse du matériau à laminer est formée en tant que valeur réelle de la vitesse, et qu'il est prévu un dispositif (36–39) de réglage de trajet parcouru, qui, à partir de la distance de consigne, que le produit laminé a parcourue pour atteindre la position désirée, calcule l'allure de la vitesse du produit laminé, nécessaire pour cette distance après la commutation depuis le réglage de la force électromotrice sur le réglage de la vitesse et forme une valeur de consigne de la vitesse dérivée de cette allure, et que pour réaliser la commutation sans à-coups et éviter «l'emballement» de dispositifs non chargés d'entraînement des rouleaux lors de la commutation depuis le réglage de la force électromotrice sur le réglage de la vitesse, il est prévu un montage (14, 15, 20), qui, à partir des valeurs réelles de la force électromotrice et de la vitesse, détermine le maximum de la valeur absolue, avec le signe correct et envoie cette valeur de valeur absolue maximale en tant que grandeur de valeur réelle à l'étage de réglage (21) qui forme, à partir de cette grandeur et des valeurs de consigne de la force électromotrice et de la vitesse du produit laminé, une valeur de consigne du courant pour le dispositif (22) de réglage de la vitesse de rotation.

2. Dispositif suivant la revendication 1, caractérisé par le fait que le montage (14, 15, 20) est constitué, pour la sélection de la valeur maximale des valeurs réelles de la force électromotrice, et de la vitesse du produit laminé, par un étage (14) pour la sélection de la valeur la plus positive et par un étage (15) pour la sélection de la valeur la plus négative, étages auxquels les valeurs réelles de la force électromotrice et de la vitesse du produit laminé ainsi qu'une valeur nulle sont envoyées et qui, à partir de là, forment, à l'aide d'un amplificateur additionneur (20), une valeur réelle résultante qui représente le maximum en valeur absolue des valeurs réelles de la force électromotrice et de la vitesse, avec des signes corrects.

3. Dispositif suivant la revendication 1 ou 2, caractérisé par le fait qu'entre les générateurs (10, 16) des valeurs réelles de la force électromotrice et de la vitesse du produit laminé et le montage (14, 15, 16) servant à former la valeur maximale, il est prévu des étages à valeur de seuil (11, 12, 13 et 17, 18, 19), dont le fonctionnement peut être branché et débranché par une unité de commande (26) et qui deviennent actifs lorsque le produit laminé (3) pénètre dans la zone de mesure de la vitesse, de manière que lors de la mise en oeuvre d'un type de réglage, les valeurs réelles parviennent, l'une non modifiée et l'autre pondérée, c'est-à-dire lors du dépassement de valeurs limites positives et négatives pouvant être sélectionnées, au montage (14, 15, 20) servant à former la valeur maximale et inversement, les étages à valeur de seuil étant formés chacun par un étage limiteur (11, 17) comportant des tensions de limitation variables ($+B_{EMK}$, $-B_{EMK}$ et $+Bv$ et $-Bv$), un amplificateur inverseur (12, 18) et un amplificateur additionneur (13, 19).

4. Dispositif suivant l'une des revendications précédentes, caractérisé par le fait que les valeurs de consigne de la force électromotrice et de la vitesse du produit laminé ainsi que les tensions limites pour les étages limiteurs (11, 17) servant à limiter la force électromotrice et la vitesse du produit laminé sont envoyées au moyen de générateurs (30, 31, 40) de signaux de marche à régime élevé avec des gradients pouvant être sélectionnés pour l'accroissement progressif du signal ou de la tension, aux étages associés.

FIG 1

FIG 2